# EUROPÄISCHE PATENTANMELDUNG

(11) **EP 1 655 092 A1**
(43) Veröffentlichungstag der Anmeldung: **10.05.2006**
(21) Anmeldenummer: 04026621.5
(22) Anmeldetag: 09.11.2004
(51) Int. Cl.: B23H 9/00, B23H 9/14, B23H 9/16, B23H 9/10, C25D 3/60, C25D 5/10

(54) **Verfahren zur elektrolytischen Bearbeitung eines Bauteils mit Durchgangsloch**

(71) Anmelder: SIEMENS AKTIENGESELLSCHAFT, 80333 München (DE)
(72) Erfinder: Jabado, Rene, 14199 Berlin (DE); Kaden, Uwe, Dr., 14513 Teltow (DE); Krüger, Ursus, Dr., 14089 Berlin (DE); Körtvelyessy, Daniel, 13467 Berlin (DE); Reiche, Ralph, 13465 Berlin (DE); Rindler, Michael, 15566 Schöneiche (DE); Steinbach, Jan, Dr., 13353 Berlin (DE); Tiemann, Peter, 58452 Witten (DE)

(57) **Zusammenfassung**

Elektrolytische Verfahren werden nach dem Stand der Technik verwendet, um außen liegende große Flächen zu bearbeiten.

Das erfindungsgemäße Verfahren beinhaltet die Innenbearbeitung von Durchgangslöchern (7, 7', 7'', 7''', 7'''', 7''''') einer Wand (4), wobei jedem zu bearbeitenden Durchgangsloch (7, 7', 7'', 7''') jeweils eine Polelektrode (19, 19', 19'', 19''') zugeordnet ist.

## Beschreibung

Die Erfindung betrifft ein Verfahren zur Innenbearbeitung eines Durchgangslochs eines Bauteils gemäß des Gattungsbegriffs des Anspruchs 1 und ein Bauteil mit Durchgangsloch gemäß des Gattungsbegriffs des Anspruchs 14.

Durchgangslöcher von Bauteilen müssen manchmal nachbearbeitet werden, weil sie nicht die gewünschte Geometrie aufweisen. Dies kann bei einem neu hergestellten Bauteil der Fall sein, wenn der Durchmesser zu groß ausgefallen ist, dann muss Material in dem Durchgangsloch aufgetragen werden.

Ebenso kann es sein, dass das Durchgangsloch aufgrund des Betriebs des Bauteils oxidiert oder korrodiert ist und die Oxidation- oder Korrosionsprodukte entfernt werden müssen, wodurch sich die Geometrie verändert, also der Querschnitt oder der Durchmesser des Durchgangslochs vergrößert ist.
Für einen erneuten Einsatz des Bauteils wird es wiederaufgearbeitet, wobei die gewünschte Geometrie wieder eingestellt werden muss (EP 1 160 352 A1).

Die DE 198 32 767 A1 beschreibt ein Verfahren zum Reinigen eines Bauteils, wobei die Reinigungsflüssigkeit durch die Durchgangslöcher strömt.

Die DE 34 03 402 offenbart die elektrochemische Bearbeitung eines Werkstücks an der äußeren Oberfläche, wobei der Elektrolyt die Oberfläche angreift.

Die US 5,865,977 beschreibt eine Methode um den Durchfluss eines Elektrolyten durch einen Kanal zu bestimmen.

Die CH 397 900, die DE 44 28 207 A1, die US 6,234,752 B1, die US 6,303,193 B1 sowie die US 2003/0173213 A1 offenbaren Verfahren zur elektrolytischen Bearbeitung eines Werkstücks.

Es ist daher Aufgabe der Erfindung ein Verfahren aufzuzeigen, das die Innenbearbeitung eines Durchgangslochs ermöglicht.

Die Aufgabe wird gelöst durch ein Verfahren gemäß Anspruch 1.

Eine weitere Aufgabe der Erfindung besteht darin, ein Bauteil aufzuzeigen, das trotz von einer Soll-Geometrie abweichender Geometrie eines Durchgangslochs verwendet werden kann.

Die Aufgabe wird gelöst durch ein Bauteil gemäß Anspruch 14.

In den Unteransprüchen sind weitere vorteilhafte Maßnahmen aufgelistet.
Diese Maßnahmen können beliebig miteinander in vorteilhafter Art und Weise kombiniert werden.

Es zeigen
- Figur 1 - 5: Vorrichtungen zur Durchführung des erfindungsgemäßen Verfahrens,
- Figur 6, 7: Verfahrensteilschritte des erfindungsgemäßen Verfahrens,
- Figur 8: einen schematischen Verlauf der zeitlichen Änderung einer Durchflussmenge,
- Figur 9: eine Turbinenschaufel,
- Figur 10, 11: eine Brennkammer und
- Figur 12: eine Gasturbine.

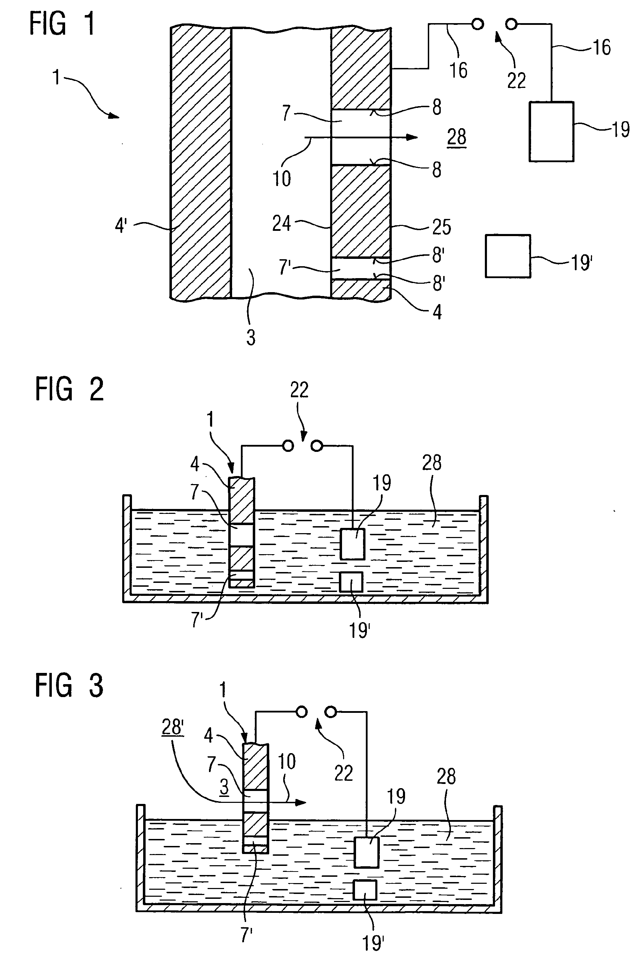

Figur 1 zeigt ein Bauteil 1, das beispielsweise einen Hohlraum 3, zumindest eine äußere Wand 4, 4' mit zumindest zwei Durchgangslöchern 7, 7' in zumindest einer äußeren Wand 4, 4' sowie eine innere 24 und eine äußere 25 Oberfläche aufweist.

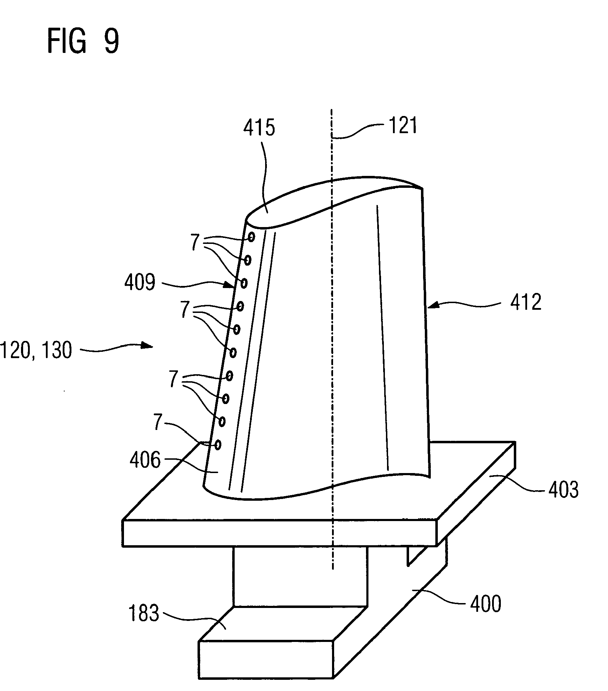

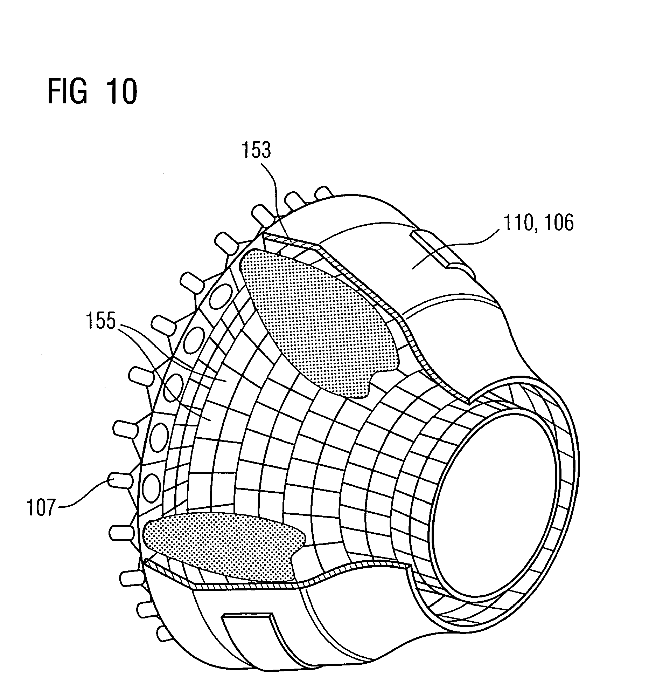

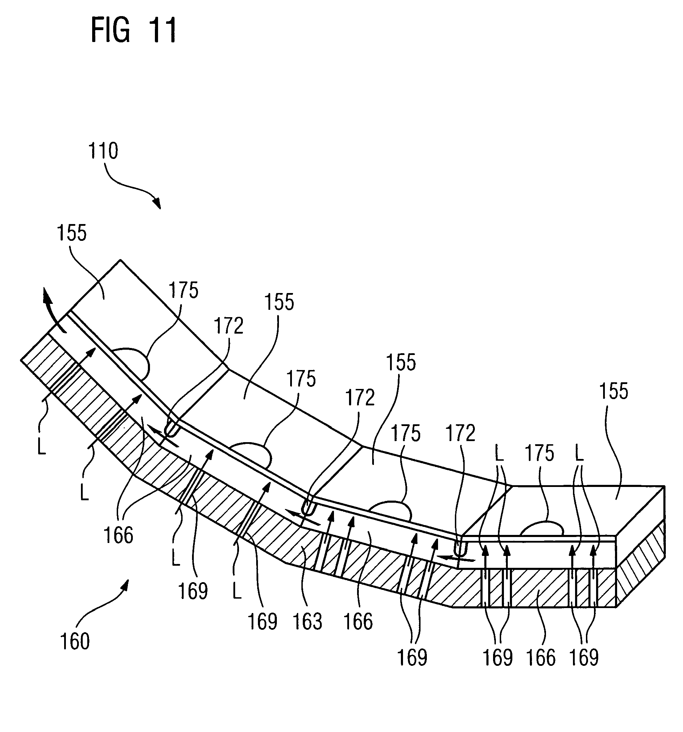

Das Bauteil 1 kann beispielsweise ein hohles (z.B. Turbinenschaufel 120, 130, Fig. 9) oder plattenförmiges Bauteil 1 (z.B. Hitzeschildelement 155, Fig. 10, 11) sein.

Die Durchgangslöcher 7, 7' weisen einen Querschnitt auf, der beispielsweise rund ist und der bearbeitet werden muss, weil er beispielsweise für die Anwendung zu groß ist und daher verjüngt werden muss.
Andere Geometrien können ebenfalls mit dem erfindungsgemäßen Verfahren bearbeitet werden.

Eine Verjüngung der Durchgangslöcher 7, 7' erfolgt durch eine elektrolytische Beschichtung der Durchgangslöcher 7, 7' an den jeweiligen Innenflächen 8, 8'.

Insbesondere strömt dabei ein Elektrolyt 28 durch die Durchgangslöcher 7, 7', beispielsweise in Pfeilrichtung 10 (beispielsweise von innen nach außen, also aus dem Hohlraum 3 heraus), um Material auf den Innenflächen 8, 8' der Durchgangslöcher 7, 7' elektrolytisch aufzutragen.

Der zeitliche Fortschritt der Innenbeschichtung eines, mehrerer oder aller Durchgangslöcher 7, 7' kann beispielsweise überwacht werden, indem der Durchfluss (Volumen bzw. Masse pro Zeit) des Elektrolyts 28 durch das Durchgangsloch 7 bestimmt wird.
Der Fortschritt der Innenbeschichtung kann kontinuierlich (beispielsweise online) oder diskontinuierlich überwacht werden.
Die Überwachung kann auch nur für ein Durchgangsloch 7, 7' erfolgen. Bei unterschiedlichen Geometrien der Durchgangslöcher 7, 7' empfiehlt es sich mehrere Durchgangslöcher 7, 7' zu überwachen.
Dadurch, dass bei der Innenbeschichtung Material auf die Innenseite 8, 8' des Durchgangslochs 7, 7' aufgetragen wird, verjüngt sich der Querschnitt des Durchgangslochs 7, 7' und die Durchflussmenge des Elektrolyts 28 pro Zeit t verringert sich.

Es wird anhand vorher erfolgter Kalibrierungsmessungen festgelegt, wann die gewünschte Soll-Geometrie des Durchgangslochs 7, 7' erreicht ist.

Zur Bestimmung des Fortschritts der Innenbeschichtung kann jedes Verfahren zur Bestimmung der Durchflussmenge eines Mediums durch ein Durchgangsloch 7, 7' benutzt werden.

Für Durchflussmengenmessungen können insbesondere die verschiedenen Prinzipien der Druckdifferenz (Staurohr nach Bernoulli, Durchflussmessung nach dem Wirkdruckverfahren oder Venturirohr mit Membran), der Schwebekörperdurchflussmesser, der induktiven Durchflussmessung oder der Ultraschallflowmeter verwendet werden.

Wenn Material in den Durchgangslöchern 7, 7' aufgetragen wird, so ändert sich die Zusammensetzung oder Konzentration des durchgeströmten Elektrolyten 28 (z.B. Konzentration des Beschichtungsmaterials, die abnimmt oder die Konzentration eines Elements, das abgetragen wird, nimmt zu), die beispielsweise wiederum kapazitiv oder induktiv oder durch andere Arten der Konzentrationsmessung erfasst wird.

Für die Elektrolyse stellt das Bauteil 1 beispielsweise eine Gegenpolelektrode dar und ist über elektrische Zuleitungen 16 mit einer Strom-/Spannungsquelle 22 mit weiteren Polelektrode 19, 19' verbunden, die die gleiche Polung aufweisen. Das Bauteil 1 ist eine Kathode im Beschichtungsverfahren und im Entschichtungsverfahren eine Anode. Entsprechend sind die Polelektroden 19, 19' Anode oder Kathode.

Bauteil 1 und Polelektroden 19, 19' sind beispielsweise zusammen in einem Elektrolyten 28 (Fig. 2) angeordnet, so dass sich ein elektrischer Stromkreis schließt.

Beispielsweise kann anhand der Ermittlung des Stromabfalls mittels Kalibrierungskurven der Durchfluss durch das Durchgangsloch 7, 7' ermittelt werden.

Der Elektrolyt 28 kann dann beispielsweise veranlasst durch einen Propellerantrieb (nicht dargestellt) durch die Durchgangslöcher 7, 7' strömen. Dabei sind die Durchgangslöcher 7, 7' im Elektrolyt 28 angeordnet.

Bei einem hohlen Bauteil 1 wird der Elektrolyt 28 beispielsweise in den Hohlraum 3, bei einer Turbinenschaufel 120, 130 beispielsweise unten durch den Schaufelfuß 183, gepumpt, so dass er 28 durch die Durchgangslöcher 7, 7' wieder austritt. Dabei können die Durchgangslöcher 7, 7' im (Fig. 2) oder außerhalb (Fig. 3) des Elektrolyts 28 angeordnet sein.

Die Durchgangslöcher 7, 7' müssen nicht notwendigerweise, können aber, in demselben Elektrolytbad 28 wie Bauteil 1 und Polelektrode 19 vorhanden sein.
Der Elektrolyt 28' für die Innenbeschichtung der Durchgangslöcher 7, 7' kann nämlich auch separat zugeführt werden (Fig. 3), beispielsweise durch den Hohlraum 3 oder von außen durch die Durchgangslöcher 7, 7'.

Bei der separaten Zuführung kann beispielsweise ein anderer Elektrolyt 28' verwendet werden, als der Elektrolyt 28, in dem die Polelektrode 19, 19' und das Bauteil 1 angeordnet sind.

Die Elektrolyten 28, 28' können beispielsweise verschieden in ihrer Zusammensetzung und/oder Konzentration des Materials für die Beschichtung sein.
Die Durchgangslöcher 7, 7' können dabei außerhalb des Elektrolyts 28 angeordnet sein (Fig. 3) oder im Elektrolyt 28 (nicht dargestellt) angeordnet sein.

Als Material für die Innenbeschichtung können beispielsweise ein oder mehrere metallische Elemente (A1, Pt, Cr) oder Legierungen (MCrAlX) oder keramische Materialien (Al₂O₃) verwendet werden.

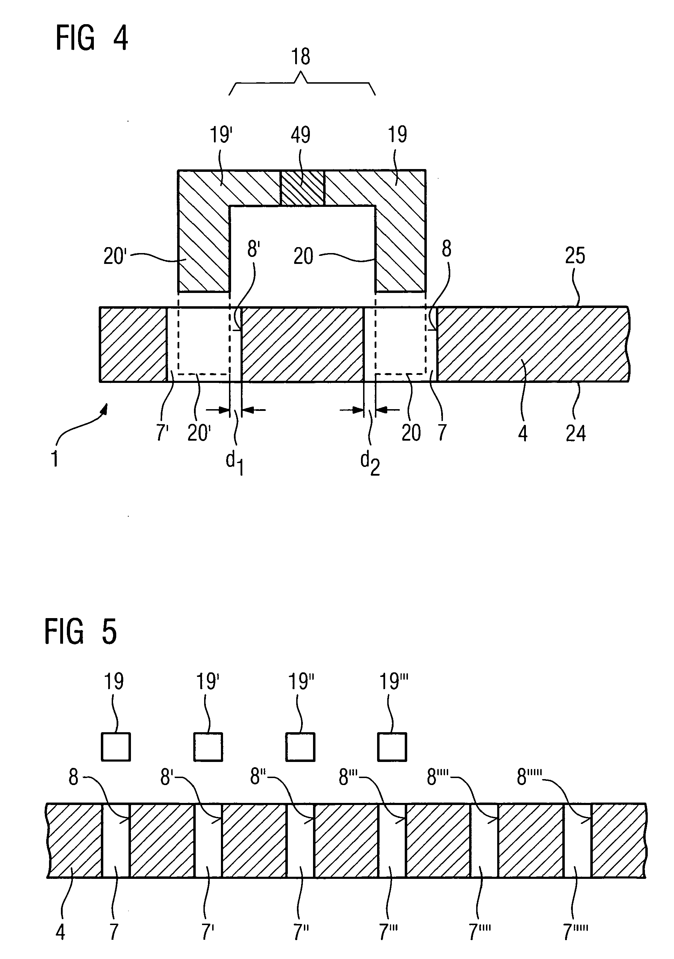

Figur 4 zeigt eine vergrößerte Darstellung der Figur 1.

Das Bauteil 1 weist beispielsweise zumindest zwei Durchgangslöcher 7, 7' auf, die gleichzeitig zur Beschichtung oder Entschichtung bearbeitet werden können.

Jedem Durchgangsloch 7, 7' ist separat jeweils eine beispielsweise speziell ausgeformte Polelektrode 19, 19' zugeordnet, die entweder in der Nähe der Durchgangslöcher 7, 7' oder sogar in den Durchgangslöchern 7, 7' angeordnet ist (gestrichelt dargestellt). So wird beispielsweise erreicht, dass nur oder hauptsächlich das Durchgangsloch 7, 7' innen beschichtet oder entschichtet wird.
Unterschiedliche Polelektroden 19, 19' sind beispielsweise dann erforderlich, wenn die Durchgangslöcher 7, 7' schon bei der Neuherstellung gewollt eine unterschiedliche Geometrie aufweisen oder wenn bei einer Wiederaufarbeitung ursprünglich baugleiche Durchgangslöcher 7, 7' unterschiedlich während des Betriebs degradiert sind.

Da jedem Durchgangsloch 7, 7' eine separate Polelektrode 19, 19' zugeordnet ist oder zugeordnet werden kann, nehmen auch die Potentiale zwischen den Polelektroden 19, 19' und der Wand 4 des Bauteils 1 unterschiedlich ab oder zu, wenn der Abstand der Polelektroden 19, 19' zu den Durchgangslöchern 7, 7' unterschiedlich ist, da der Querschnitt der Durchgangslöcher 7, 7' unterschiedlich ist.

Eine separate Überwachung bzw. separate Ansteuerung der Polelektroden 19, 19' ist insbesondere wichtig bei der Innenbeschichtung der Durchgangslöcher 7, 7'.

Die separate Ansteuerung der Polelektroden 19, 19' kann aber nicht nur beim Beschichtungsverfahren, sondern auch bei dem Entschichtungsverfahren angewendet werden.

Bei einem Entschichtungsverfahren wird der Abstand d₁, d₂ zwischen Vorsprüngen 20, 20' der Polelektroden 19, 19' und der Wand 4 größer. Wenn dieser Abstand zu groß wird, stoppt der Prozess automatisch, da das Potential zu klein wird.
Da die Abstände d₁, d₂ der Durchgangslöcher 7, 7' unterschiedlich sind, stoppt der Prozess individuell in jedem Durchgangsloch 7, 7' zu verschiedenen Zeitpunkten.

Gegebenenfalls sind die separaten Polelektroden 19, 19' durch eine elektrische Isolierung 49 elektrisch voneinander getrennt, aber mechanisch verbunden, so dass die Handhabung als ein einziges Werkzeug 18 vereinfacht ist.

Insbesondere sind die Polelektroden 19, 19' aus Metall oder Kohlenstoff.

Die Figur 5 zeigt mehrere Durchgangslöcher 7, 7', 7'', 7''', 7'''' mit ihren Polelektroden 19, 19', 19'', 19'''.

Die Wand 4 kann mehrere Durchgangslöcher 7, 7', 7'', 7''', 7'''', 7''''' aufweisen, die alle (nicht dargestellt) oder wie hier beispielsweise nur zum Teil bearbeiten werden (7, 7', 7'', 7"') .

Beispielsweise weist ein Teil der Durchgangslöcher 7, 7', 7'', 7''' eine bestimmte Geometrie auf; sie werden zusammen in einem Prozess bearbeitet.
Die übrigen Durchgangslöcher 7'''', 7''''' werden nicht bearbeitet oder werden in einem folgenden, separaten elektrolytischen Verfahrensschritt behandelt, in dem beispielsweise jedem Durchgangsloch 7'''', 7''''' wiederum eine separate Polelektrode 19'''', 19''''' (nicht dargestellt) zugeordnet werden kann.

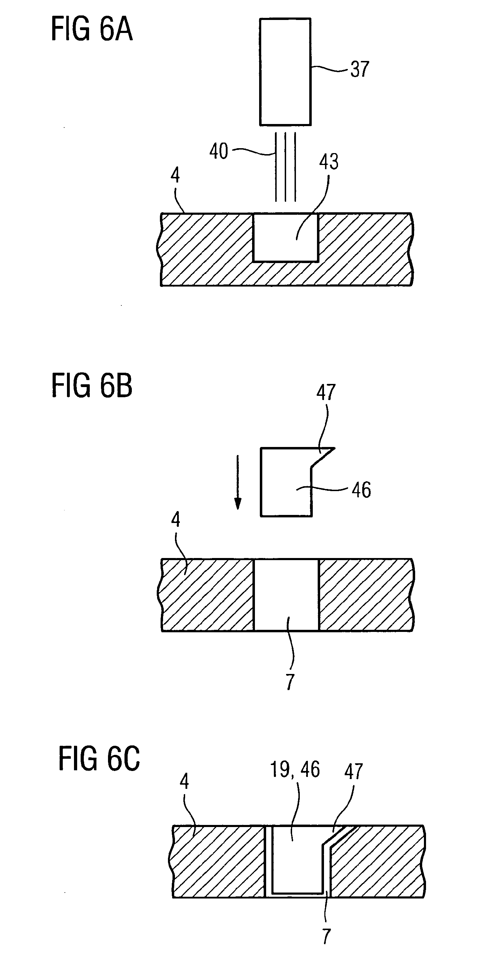

Figur 6 zeigt eine weitere Variante des erfindungsgemäßen Verfahrens.

Hierbei kann in einem ersten Schritt zumindest ein Durchgangsloch 7 (Fig. 6a Durchgangsloch 7 im Zwischenschritt noch als Sackloch 43 vorhanden, Durchgangsloch 7 Fig. 6b), 6c)) beispielsweise mittels eines Lasers 37 und seiner Laserstrahlen 40 hergestellt (Figur 6a) werden.

In einem weiteren oder den Verfahrensschritt nach Figur 6a ersetzenden Verfahrensschritt zur Herstellung des Durchgangslochs 7 wird eine EDM-Elektrode 46 in einem Erodierverfahren verwendet, wobei die EDM-Elektrode 46 die Kontur, insbesondere eine komplexere Form (Diffusor 47) des Durchgangslochs 7 aufweist (Fig. 6b) ) .

Diese EDM-Elektrode 46 kann wiederum bei dem sich anschließenden elektrolytischen Beschichtungsverfahren als Polelektrode 19 verwendet werden (Figur 6 c)).

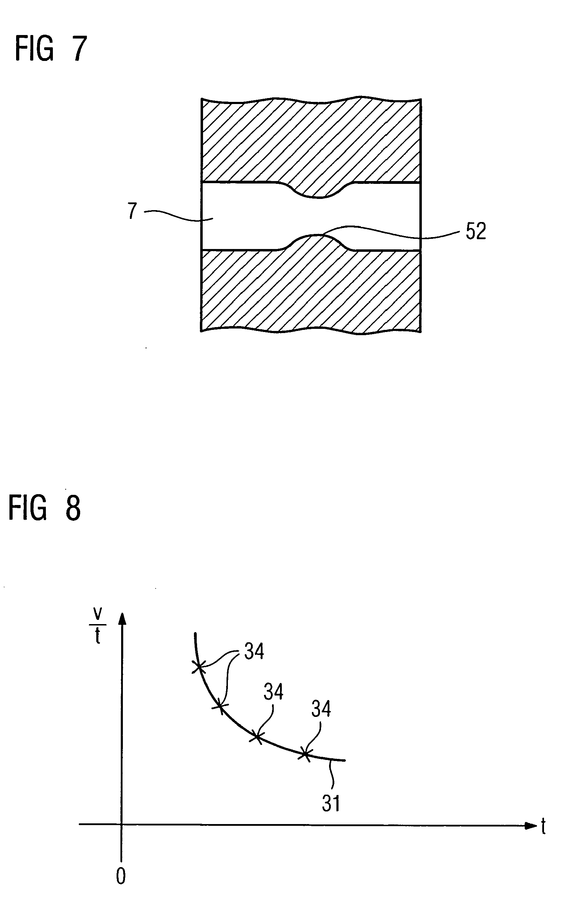

Figur 7 zeigt einen Durchgangskanal 7, der Vorsprünge 52 aufweist, die den Durchfluss lokal einengen. Dies ist jedoch nicht erwünscht.

Durch das Anlegen von hohen Spannungspulsen können bei dem Entschichtungsverfahren insbesondere die lokalen Vorsprünge 52 abgetragen werden, da hier der Abstand zwischen der Polelektrode 19 und dem Vorsprung 52 klein ist. Damit wird ein gleichmäßiger Verlauf des Querschnitts des Durchgangslochs 7 erreicht, der dann noch beschichtet oder entschichtet wird.

Gegebenenfalls können Maskierungen für die Oberflächen 24, 25 verwendet werden, so dass nur das Durchgangsloch 7 beschichtet wird.

Wahlweise können nur die Innenflächen 8 und die innere Oberfläche 24 des Bauteils 1 beschichtet werden. Dabei wird beispielsweise Aluminium zur Innenalitierung verwendet.

Zusätzlich könnte auch die äußere Oberfläche 25 des Bauteils 1 mit beschichtet werden, wenn beispielsweise auch die äußere Oberfläche aluminiert werden soll.

Weiterhin können nur die Innenflächen 8 der Durchgangslöcher 7 und die äußere Oberfläche 25 des Bauteils 1 beschichtet, wenn z.B. eine MCrAlX-Schicht auf der äußeren Oberfläche 25 benötigt wird.

Figur 8 zeigt beispielhaft einen schematischen Verlauf der zeitlichen Änderung der Durchflussmenge durch ein Durchgangsloch 7 während eines Beschichtungsprozesses.

Wenn bei der Innenbeschichtung des Durchgangslochs 7 Material an den Innenflächen 8 des Durchgangslochs 7 aufgetragen wird, so verjüngt sich der Querschnitt des Durchgangslochs 7 und die Durchflussmenge V/t fällt mit der Zeit ab, wie es die Kurve 31 mit der durchgezogenen Linie darstellt.
Die Kurve 31 kann kontinuierlich oder diskontinuierlich durch Messen einzelner Werte 34 bestimmt werden.
In beiden Fällen kann die Messung online überwacht werden, d.h. die Werte werden an einem Computer übermittelt, der das Verfahren abbricht, wenn der vorgegebene Wert für die Durchflussmenge, der einer gewünschten Geometrie des Durchgangslochs 7 entspricht, erreicht ist.

Die Kurve 31 ist nur schematisch und kann aus einem anderen Verlauf (z.B. linear) aufweisen.

Figur 9 zeigt in perspektivischer Ansicht eine Schaufel 120, 130 als beispielhaftes Bauteil 1 mit einem Durchgangsloch 7, das erfindungsgemäß bearbeitet wird.

Die Schaufel 120 kann eine Laufschaufel 120 oder Leitschaufel 130 einer Strömungsmaschine sein, die sich entlang einer Längsachse 121 erstreckt. Die Strömungsmaschine kann eine Gasturbine eines Flugzeugs oder eines Kraftwerks zur Elektrizitätserzeugung, eine Dampfturbine oder ein Kompressor sein.

Die Schaufel 120, 130 weist entlang der Längsachse 121 aufeinander folgend einen Befestigungsbereich 400, eine daran angrenzende Schaufelplattform 403 sowie ein Schaufelblatt 406 auf.
Als Leitschaufel 130 kann die Schaufel an ihrer Schaufelspitze 415 eine weitere Plattform aufweisen (nicht dargestellt) .

Im Befestigungsbereich 400 ist ein Schaufelfuß 183 gebildet, der zur Befestigung der Laufschaufeln 120, 130 an einer Welle oder einer Scheibe dient (nicht dargestellt).

Der Schaufelfuß 183 ist beispielsweise als Hammerkopf ausgestaltet. Andere Ausgestaltungen als Tannenbaum- oder Schwalbenschwanzfuß sind möglich.
Die Schaufel 120, 130 weist für ein Medium, das an dem Schaufelblatt 406 vorbeiströmt, eine Anströmkante 409 und eine Abströmkante 412 auf.

Bei herkömmlichen Schaufeln 120, 130 werden in allen Bereichen 400, 403, 406 der Schaufel 120, 130 beispielsweise massive metallische Werkstoffe verwendet.
Die Schaufel 120, 130 kann hierbei durch ein Gussverfahren, auch mittels gerichteter Erstarrung, durch ein Schmiedeverfahren, durch ein Fräsverfahren oder Kombinationen daraus gefertigt sein.

Werkstücke mit einkristalliner Struktur oder Strukturen werden als Bauteile für Maschinen eingesetzt, die im Betrieb hohen mechanischen, thermischen und/oder chemischen Belastungen ausgesetzt sind.
Die Fertigung von derartigen einkristallinen Werkstücken erfolgt z.B. durch gerichtetes Erstarren aus der Schmelze. Es handelt sich dabei um Gießverfahren, bei denen die flüssige metallische Legierung zur einkristallinen Struktur, d.h. zum einkristallinen Werkstück, oder gerichtet erstarrt.
Dabei werden dendritische Kristalle entlang dem Wärmefluss ausgerichtet und bilden entweder eine stängelkristalline Kornstruktur (kolumnar, d.h. Körner, die über die ganze Länge des Werkstückes verlaufen und hier, dem allgemeinen Sprachgebrauch nach, als gerichtet erstarrt bezeichnet werden) oder eine einkristalline Struktur, d.h. das ganze Werkstück besteht aus einem einzigen Kristall. In diesen Verfahren muss man den Übergang zur globulitischen (polykristallinen) Erstarrung meiden, da sich durch ungerichtetes Wachstum notwendigerweise transversale und longitudinale Korngrenzen ausbilden, welche die guten Eigenschaften des gerichtet erstarrten oder einkristallinen Bauteiles zunichte machen.

Ist allgemein von gerichtet erstarrten Gefügen die Rede, so sind damit sowohl Einkristalle gemeint, die keine Korngrenzen oder höchstens Kleinwinkelkorngrenzen aufweisen, als auch Stängelkristallstrukturen, die wohl in longitudinaler Richtung verlaufende Korngrenzen, aber keine transversalen Korngrenzen aufweisen. Bei diesen zweit genannten kristallinen Strukturen spricht man auch von gerichtet erstarrten Gefügen (directionally solidified structures).

Solche Verfahren sind aus der US-PS 6,024,792 und der EP 0 892 090 A1 bekannt.

Wiederaufarbeitung (Refurbishment) bedeutet, dass Bauteile 120, 130 nach ihrem Einsatz gegebenenfalls von Schutzschichten befreit werden müssen (z.B. durch Sandstrahlen). Danach erfolgt eine Entfernung der Korrosions- und/oder Oxidationsschichten bzw. -produkte. Gegebenenfalls werden auch noch Risse im Bauteil 120, 130 repariert. Danach erfolgt eine Wiederbeschichtung des Bauteils 120, 130 und ein erneuter Einsatz des Bauteils 120, 130.

Die Schaufel 120, 130 ist hohl ausgeführt.
Wenn die Schaufel 120, 130 gekühlt werden soll, und weist noch Filmkühllöcher 7 (Durchgangsloch 7) auf, die mittels des erfindungsgemäßen Verfahrens nachbearbeitet werden können. Als Schutz gegen Korrosion weist die Schaufel 120, 130 beispielsweise entsprechende meistens metallische Beschichtungen auf und als Schutz gegen Wärme meistens noch eine keramische Beschichtung.

Die Figur 10 zeigt eine Brennkammer 110 einer Gasturbine 100. Die Brennkammer 110 ist beispielsweise als so genannte Ringbrennkammer ausgestaltet, bei der eine Vielzahl von in Umfangsrichtung um die Turbinenwelle 103 herum angeordneten Brennern 102 in einen gemeinsamen Brennkammerraum münden. Dazu ist die Brennkammer 110 in ihrer Gesamtheit als ringförmige Struktur ausgestaltet, die um die Turbinenwelle 103 herum positioniert ist.

Zur Erzielung eines vergleichsweise hohen Wirkungsgrades ist die Brennkammer 110 für eine vergleichsweise hohe Temperatur des Arbeitsmediums M von etwa 1000°C bis 1600°C ausgelegt. Um auch bei diesen, für die Materialien ungünstigen Betriebsparametern eine vergleichsweise lange Betriebsdauer zu ermöglichen, ist die Brennkammerwand 153 auf ihrer dem Arbeitsmedium M zugewandten Seite mit einer aus Hitzeschildelementen 155 gebildeten Innenauskleidung versehen. Jedes Hitzeschildelement 155 ist arbeitsmediumsseitig mit einer besonders hitzebeständigen Schutzschicht ausgestattet oder aus hochtemperaturbeständigem Material gefertigt. Aufgrund der hohen Temperaturen im Inneren der Brennkammer 110 ist zudem für die Hitzeschildelemente 155 bzw. für deren Halteelemente ein Kühlsystem vorgesehen.

Ein Hitzeschildelement 155 als Beispiel für ein Bauteil 1 (Durchgangsloch 7) weist beispielsweise Löcher auf (nicht dargestellt), durch die ein Brennstoff oder Brennstoff/Gasgemisch strömt und die mittels des erfindungsgemäßen Verfahrens bearbeitet werden können.

Die Materialien der Brennkammerwand und deren Beschichtungen können ähnlich der Turbinenschaufeln sein.

In Figur 11 ist eine Hitzeschildanordnung 160 dargestellt, bei welcher auf einer Tragstruktur 163 flächendeckend nebeneinander Hitzeschildelemente 155 angeordnet sind. Üblicherweise sind beispielsweise zur Auskleidung eines größeren Heißgasraumes, wie z.B. einer Brennkammer 110, mehrere Reihen von Hitzeschildelementen 155 aneinandergrenzend auf der Tragstruktur 163 angeordnet.
Die Hitzeschildanordnung 160 kann beispielsweise die Brennkammer 110 und/oder einen Übergangsbereich zwischen Brennkammer 110 und Turbinenschaufel 112 einer Gasturbine 100 auskleiden, um eine Beschädigung der Tragstruktur 163 während des Betriebs der Gasturbine 100 zu verhindern.

Um die thermischen Belastungen zu reduzieren, ist es beispielsweise vorgesehen, die Hitzeschildelemente 155 jeweils auf deren der Brennkammer 110 abgewandten Fläche mittels Kühlluft zu kühlen.

Mindestens zwei benachbarte Hitzeschildelemente 155a, 155b bilden zwischen der Tragstruktur 163 und jeweils der dem Heißgas 113 abgewandten Fläche der Hitzeschildelemente 155a, 155b einen Kühlluftkanal 166. Auf diese Weise kommunizieren die beiden genannten benachbarten Hitzeschildelemente 155a, 155b z.B. über den Kühlluftstrom L, welcher direkt von einem der Nachbarn zum anderen in dem durch die Nachbarn gebildeten, gemeinsamen Kühlluftkanal 166 fließt.

In der Figur 11 sind als Beispiel vier Hitzeschildelemente 155 dargestellt, welche einen gemeinsamen Kühlluftkanal 166 bilden. Es kommt jedoch auch eine deutlich größere Anzahl an Hitzeschildelementen in Frage, welche auch in mehreren Reihen angeordnet sein können.

Die Kühlluft L, welche durch Öffnungen 169 (Durchgangslöcher 7) in den Kühlluftkanal 166 eingespeist ist, kühlt die Hitzeschildelemente 155 rückseitig beispielsweise mittels Prallkühlung, wobei die Kühlluft L praktisch senkrecht auf die dem Heißgas abgewandte Fläche der Hitzeschildelemente 155 trifft und dadurch thermische Energie aufnehmen und abführen kann. Die Kühlung der Hitzeschildelemente 155 kann weiterhin durch Konvektionskühlung erfolgen, wobei Kühlluft L dabei im Wesentlichen parallel zur Oberfläche der Hitzeschildelemente 155 an deren Rückseite entlang streicht und dadurch ebenfalls thermische Energie aufnehmen und abführen kann.

In der Figur 11 bewegt sich die Kühlluft L als Kühlluftstrom größtenteils von rechts nach links in dem von den Hitzeschildelementen 155 gemeinsam gebildeten Kühlluftkanal 166 und kann einem Brenner 107, welcher sich beispielsweise in der Brennkammer 110 befindet, zugeführt werden, um für die Verbrennung genutzt zu werden.

Um ein Austreten der Kühlluft L aus dem Kühlluftkanal 166 direkt in die Brennkammer 110 und ein Eintreten von Heißgas aus der Brennkammer 110 in den Kühlluftkanal 166 zu verhindern, sind beispielsweise Dichtelemente 172 zwischen den Hitzeschildelementen 155 vorgesehen.

In der Figur 11 ist beispielsweise außerdem eine Verschraubungsvorrichtung 175, beispielsweise eine Versenkung zur Aufnahme einer Schraube, dargestellt. Vorteilhaft wird zur Verankerung der Hitzeschildelemente 155 mit der Tragstruktur 163 ein Befestigungselement, beispielsweise eine Schraube, in die Verschraubungsvorrichtung 175 eingeführt und auf Seiten der Tragstruktur 103 beispielsweise mittels einer Mutter befestigt.

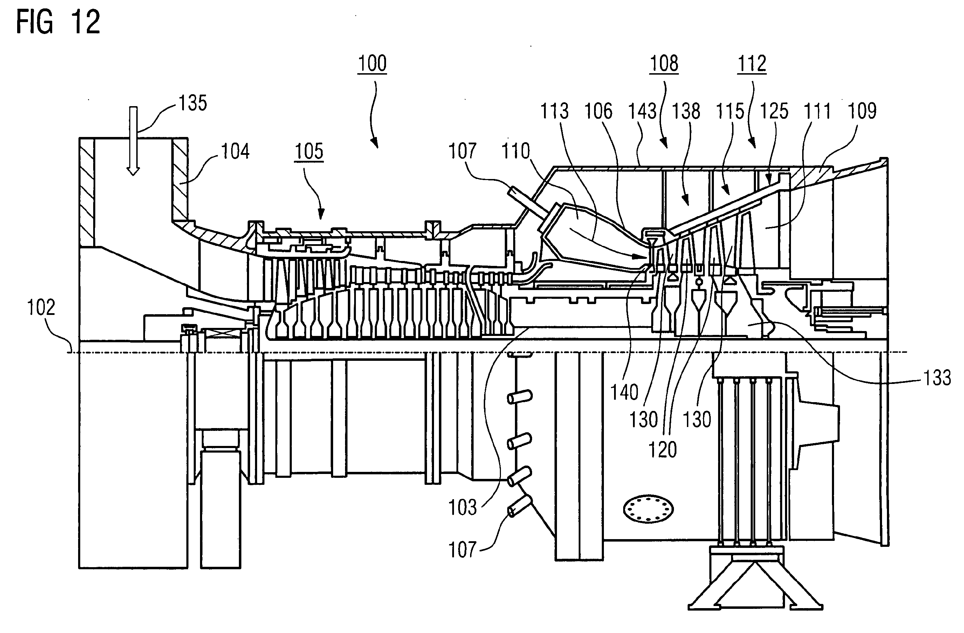

Die Figur 12 zeigt beispielhaft eine Gasturbine 100 in einem Längsteilschnitt.
Die Gasturbine 100 weist im Inneren einen um eine Rotationsachse 102 drehgelagerten Rotor 103 auf, der auch als Turbinenläufer bezeichnet wird.
Entlang des Rotors 103 folgen aufeinander ein Ansauggehäuse 104, ein Verdichter 105, eine beispielsweise torusartige Brennkammer 110, insbesondere Ringbrennkammer 106, mit mehreren koaxial angeordneten Brennern 107, eine Turbine 108 und das Abgasgehäuse 109.
Die Ringbrennkammer 106 kommuniziert mit einem beispielsweise ringförmigen Heißgaskanal 111. Dort bilden beispielsweise vier hintereinander geschaltete Turbinenstufen 112 die Turbine 108.

Jede Turbinenstufe 112 ist beispielsweise aus zwei Schaufelringen gebildet. In Strömungsrichtung eines Arbeitsmediums 113 gesehen folgt im Heißgaskanal 111 einer Leitschaufelreihe 115 eine aus Laufschaufeln 120 gebildete Reihe 125.

Die Leitschaufeln 130 sind dabei an einem Innengehäuse 138 eines Stators 143 befestigt, wohingegen die Laufschaufeln 120 einer Reihe 125 beispielsweise mittels einer Turbinenscheibe 133 am Rotor 103 angebracht sind.
An dem Rotor 103 angekoppelt ist ein Generator oder eine Arbeitsmaschine (nicht dargestellt).

Während des Betriebes der Gasturbine 100 wird vom Verdichter 105 durch das Ansauggehäuse 104 Luft 135 angesaugt und verdichtet. Die am turbinenseitigen Ende des Verdichters 105 bereitgestellte verdichtete Luft wird zu den Brennern 107 geführt und dort mit einem Brennmittel vermischt. Das Gemisch wird dann unter Bildung des Arbeitsmediums 113 in der Brennkammer 110 verbrannt. Von dort aus strömt das Arbeitsmedium 113 entlang des Heißgaskanals 111 vorbei an den Leitschaufeln 130 und den Laufschaufeln 120. An den Laufschaufeln 120 entspannt sich das Arbeitsmedium 113 impulsübertragend, so dass die Laufschaufeln 120 den Rotor 103 antreiben und dieser die an ihn angekoppelte Arbeitsmaschine.

Die dem heißen Arbeitsmedium 113 ausgesetzten Bauteile unterliegen während des Betriebes der Gasturbine 100 thermischen Belastungen. Die Leitschaufeln 130 und Laufschaufeln 120 der in Strömungsrichtung des Arbeitsmediums 113 gesehen ersten Turbinenstufe 112 werden neben den die Ringbrennkammer 106 auskleidenden Hitzeschildsteinen am meisten thermisch belastet.
Um den dort herrschenden Temperaturen standzuhalten, können diese mittels eines Kühlmittels gekühlt werden.
Ebenso können Substrate der Bauteile eine gerichtete Struktur aufweisen, d.h. sie sind einkristallin (SX-Struktur) oder weisen nur längsgerichtete Körner auf (DS-Struktur).

Als Material für die Bauteile, insbesondere für die Turbinenschaufel 120, 130 und Bauteile der Brennkammer 110 werden beispielsweise eisen-, nickel- oder kobaltbasierte Superlegierungen verwendet.
Solche Superlegierungen sind beispielsweise aus der EP 1 204 776, EP 1 306 454, EP 1 319 729, WO 99/67435 oder WO 00/44949 bekannt; diese Schriften sind Teil der Offenbarung.

Ebenso können die Schaufeln 120, 130 Beschichtungen gegen Korrosion (MCrAlX; M ist zumindest ein Element der Gruppe Eisen (Fe), Kobalt (Co), Nickel (Ni), X ist ein Aktivelement und steht für Yttrium (Y) und/oder Silizium und/oder zumindest ein Element der Seltenen Erden) und Wärme durch eine Wärmedämmschicht aufweisen.
Die Wärmedämmschicht besteht beispielsweise ZrO₂, Y₂O₄-ZrO₂, d.h. sie ist nicht, teilweise oder vollständig stabilisiert durch Yttriumoxid und/oder Kalziumoxid und/oder Magnesiumoxid.
Durch geeignete Beschichtungsverfahren wie z.B. Elektronenstrahlverdampfen (EB-PVD) werden stängelförmige Körner in der Wärmedämmschicht erzeugt.

Die Leitschaufel 130 weist einen dem Innengehäuse 138 der Turbine 108 zugewandten Leitschaufelfuß (hier nicht dargestellt) und einen dem Leitschaufelfuß gegenüberliegenden Leitschaufelkopf auf. Der Leitschaufelkopf ist dem Rotor 103 zugewandt und an einem Befestigungsring 140 des Stators 143 festgelegt.

## Patentansprüche

1. Verfahren zur elektrolytischen Bearbeitung eines Bauteils (1) ,
das zumindest zwei Durchgangslöcher (7, 7', 7'', 7"', 7'''', 7''''') aufweist,
**dadurch gekennzeichnet,**
**dass** die Durchgangslöcher (7, 7', 7'', 7''', 7'''', 7''''') an ihrer Innenfläche (8, 8', 8'', 8''', 8'''', 8''''') bearbeitet,
insbesondere beschichtet werden, und
**dass** für die zu bearbeitenden Durchgangslöcher (7, 7', 7'', 7''', 7'''', 7''''') jeweils eine separate Polelektrode (19, 19', 19'', 19''') ,
die die gleiche Polung aufweisen,
verwendet wird.

2. Verfahren nach Anspruch 1,
**dadurch gekennzeichnet, dass**
ein Elektrolyt (28, 28') durch die zumindest zwei Durchgangslöcher (7, 7' , 7'', 7''', 7'''', 7''''') strömt,
insbesondere von innen nach außen aus einem Hohlraum (3) heraus,
damit die Durchgangslöcher (7, 7', 7'', 7''', 7'''', 7''''') an ihrer Innenfläche (8, 8', 8'', 8''', 8'''', 8''''') bearbeitet werden.

3. Verfahren nach Anspruch 1 oder 2,
**dadurch gekennzeichnet, dass**
das Bauteil (1) mit den Durchgangslöchern (7, 7', 7'', 7''', 7'''', 7''''') eine Gegenpolelektrode im elektrolytischen Prozess darstellt.

4. Verfahren nach Anspruch 1,
**dadurch gekennzeichnet, dass**
zumindest eine Polelektrode (19, 19', 19'', 19''') eine andere Form (20, 20') aufweist als zumindest eine andere Polelektrode (19', 19'', 19''').

5. Verfahren nach einem oder mehreren der vorherigen Ansprüche,
**dadurch gekennzeichnet,**
**dass** zumindest ein, insbesondere zwei oder mehrere Durchgangslöcher (7, 7', 7'', 7"', 7'''', 7""') mittels einer EDM-Elektrode (46) hergestellt werden, und dass diese EDM-Elektrode (46) als Polelektrode (19, 19', 19'', 19''') für das elektrolytische Verfahren benutzt wird.

6. Verfahren nach Anspruch 1, 2 oder 3,
**dadurch gekennzeichnet, dass**
die zumindest zwei Polelektroden (19, 19', 19'', 19''') außerhalb eines hohlen Bauteils (1) angeordnet werden.

7. Verfahren nach Anspruch 1,
**dadurch gekennzeichnet, dass**
der zeitlich abhängige Durchfluss des Elektrolyts (28, 28') durch zumindest ein Durchgangsloch (7, 7', 7", 7''', 7'''', 7''''') gemessen wird,
anhand dessen der Fortschritt der Innenbeschichtung des zumindest einen Durchgangslochs (7, 7' , 7'', 7''', 7'''', 7''''') ermittelt wird.

8. Verfahren nach Anspruch 1,
**dadurch gekennzeichnet,**
**dass** das Bauteil (1) in einem Elektrolyt (28) angeordnet ist, und
**dass** ein anderer Elektrolyt (28'),
insbesondere mit anderer chemischen Zusammensetzung oder anderer Konzentration eines Beschichtungsmaterials, durch die zumindest zwei Durchgangslöcher (7, 7', 7", 7''', 7'''', 7''''') strömt.

9. Verfahren nach Anspruch 1,
**dadurch gekennzeichnet, dass**
eine elektrische Spannung,
die an dem Bauteil (1) als Gegenpolelektrode und den zumindest zwei Polelektroden (19, 19', 19", 19''') anliegt, gepulst wird.

10. Verfahren nach Anspruch 1,
**dadurch gekennzeichnet, dass**
nur die Innenfläche (8, 8' , 8'', 8''', 8'''', 8''''') beschichtet wird.

11. Verfahren nach Anspruch 1,
**dadurch gekennzeichnet, dass**
nur die Innenfläche (8, 8', 8'', 8''', 8'''', 8''''') und eine innere Oberfläche (24) des Bauteils (1) beschichtet wird.

12. Verfahren nach Anspruch 1,
**dadurch gekennzeichnet, dass**
nur die Innenfläche (8, 8', 8'', 8''', 8'''', 8''''') und eine äußere Oberfläche (25) des Bauteils (1) beschichtet wird.

13. Verfahren nach Anspruch 1,
**dadurch gekennzeichnet, dass**
die Innenfläche (8, 8', 8'', 8''', 8'''', 8'''''), eine äußere (25) und eine innere (24) Oberfläche des Bauteils (1) beschichtet wird.

14. Bauteil (1) mit zumindest zwei Durchgangslöchern (7, 7', 7'', 7''', 7'''', 7''''') hergestellt nach dem Verfahren gemäß der Ansprüche 1 bis 13.

15. Bauteil nach Anspruch 14,
**dadurch gekennzeichnet,**
**dass** das neu hergestellte oder wieder aufzuarbeitende Bauteil (1) eine Turbinenkomponente,
insbesondere eine Turbinenschaufel (120, 130) oder Hitzeschildelement (155),
insbesondere einer Gasturbine (100) ist, und
**dass** insbesondere zumindest ein Durchgangsloch (7, 7', 7'', 7''', 7'''', 7''''') ein Filmkühlloch ist.
